# DEMANDE DE BREVET EUROPEEN

(11) **EP 4 074 632 A1**
(43) Date de publication de la demande: **19.10.2022**
(21) Numéro de dépôt: 22168658.7
(22) Date de dépôt: 15.04.2022
(51) Int. Cl.: B65G 19/02, B65G 35/06, B65G 17/00, B67C 7/00

(54) **APPAREILS DE MANUTENTION DANS UNE MACHINE TRAITANT DES RÉCIPIENTS**

(30) Priorité: 16.04.2021 FR 2103973
(71) Demandeur: SYNERLINK, 95650 Puiseux-Pontoise (FR)
(72) Inventeur: COSSAIS, Dominique, 91700 SAINTE GENEVIÈVE DES BOIS (FR); DOITEAU, Gaëtan, 72000 LE MANS (FR); ROYER, Jean-Michel, 95650 PUISEUX PONTOISE (FR); GUET, Julie, 95650 PUISEUX PONTOISE (FR)
(74) Mandataire: Derambure Conseil

(57) **Abrégé**

Système de manutention, dans une machine de traitement de récipients, comprenant une pluralité de plaques-support (1) circulant en circuit fermé, chaque plaque-support (1) comprenant un ou plusieurs logements, chaque logement (18) étant apte à recevoir un récipient (8), par exemple de type bouteille, un tronçon (TC1) de travail, dans lequel les plaques-support circulent en position généralement horizontale, avec un premier organe de déplacement 2 des plaques-support, dans lequel chacune des plaques-support (1) comporte une platine de retournement (6) configurée pour être pivotée de 180 degrés entre une première position (P61) et une deuxième position (P62), avec dans la première position, le récipient ayant son goulot orienté vers le haut, et dans la deuxième position, le récipient ayant son goulot orienté vers le bas.

## Description

La présente invention est relative aux appareils et systèmes de manutention dans une machine traitant des récipients de produit alimentaire. On peut appeler aussi ces machines des équipements ou lignes de production.

Ces machines (ou « équipements » ou « lignes ») permettent de remplir des récipients, par exemple des pots ou des bouteilles, avec un ou plusieurs produits alimentaires, par exemple un produit laitier et/ou des composants alimentaires, et de fermer hermétiquement ces récipients, avec en outre optionnellement marquage, étiquetage, désinfection préalable ou autre opération.

Ces machines/équipements utilisent des supports, par exemples des plaques, pour supporter les récipients pendant les opérations réalisées dans la machine.

Ces supports parcourent un circuit bouclé, en effet ils reviennent à vide après avoir été déchargés du/des récipients traité(s).

Ce genre de plaque-support est utilisé aussi dans des machines ou des installations qui traitent des récipients de produits non alimentaires auxquelles la présente invention peut être appliquée.

Les utilisateurs de ce genre d'installation demandent de plus en plus de la flexibilité car les clients finaux sont en demande de toujours plus de diversité sur le format des contenants, i.e. leur forme et leur volume. La taille des séries pour une campagne de production donnée a aussi tendance à diminuer.

Le besoin pour une installation qui puisse traiter des pots et des bouteilles devient de plus en plus prégnant. De plus, dans le cas du format bouteille, il est habituel de procéder à la préparation (désinfection/décontamination) alors que le contenant est en posture tête en bas c'est-à-dire l'ouverture dirigée vers le bas. Bien entendu on doit retourner la bouteille pour la remplir ensuite.

C'est dans ce contexte que les inventeurs ont cherché à proposer une solution pour les plaques support, pour pouvoir traiter le format bouteille sans rupture de charge sur le système de manutention.

À cet effet, il est donc proposé un système manutention, dans une machine de traitement de récipients destinés à recevoir un produit alimentaire, le système de manutention comprenant :
- une pluralité de plaques-support (1) circulant en circuit fermé, chaque plaque-support comprenant un ou plusieurs logements, chaque logement (18) étant apte à recevoir un récipient (8), par exemple de type bouteille,
- un premier tronçon TC1, dit de travail, dans lequel les plaques-support circulent en position généralement horizontale dans une première direction axiale X1A, avec un premier organe de déplacement des plaques-support le long de la première direction axiale,
caractérisé en ce que chacune des plaques-support comporte une platine de retournement (6) configurée pour être pivotée de 180 degrés entre une première position et une deuxième position,
et dans la première position, le récipient a son goulot orienté vers le bas, et dans la deuxième position, le récipient a son goulot orienté vers le haut.

Grâce à ces dispositions, il est possible de traiter le cas des contenants au format bouteille sur une ligne de production qui peut aussi traiter le cas conventionnel des pots. En effet, le pivotement de la platine de retournement est effectué à l'intérieur du premier tronçon de travail, la plaque support restant en posture horizontale.

On remarque que ceci est rendu possible par une disposition généralement en porte-à-faux du guidage et de l'entraînement des plaques support.

On peut charger les bouteilles tête en bas pour les décontaminer, pour tourner la platine, puis remplir les bouteilles tête en haut, les sceller et les décharger.

Dans divers modes de réalisation de l'invention, on peut éventuellement avoir recours en outre à l'une et/ou à l'autre des dispositions suivantes, prises isolément ou en combinaison.

Selon un aspect, la plaque support comprend une armature en forme de C avec un corps et deux bras et la platine de retournement (6) est montée à pivotement autour d'un axe de retournement X6 parallèle à l'axe longitudinal de machine X, par rapport aux deux bras.

Il s'agit d'un montage mécanique simple et robuste. La plaque support peut continuer à avancer parallèlement à elle-même dans un plan généralement horizontal alors que on fait pivoter la platine de retournement à l'intérieur des deux bras de la plaque support.

Selon un aspect, il est prévu une pluralité de logements débouchant sur la tranche de la platine de retournement, chaque logement pouvant recevoir une bouteille par son col. Ceci permet d'installer des récipients ayant un col d'embouchure plus petit que le corps de récipient, car on ne peut pas l'insérer par-dessus.

Selon un aspect, la plaque support comprend un bord longitudinal principal (11), par lequel la plaque est guidée et mise en mouvement, et du côté opposé, la plaque-support est au moins en partie en porte-à-faux de manière à autoriser le pivotement de la platine de retournement avec les bouteilles.

On note que l'interface mécanique entre les moyens de guidage et de motorisation du système de manutention et les plaques support qu'elles soient équipées de platine de retournement ou non, est un invariant du système. La partie en porte-à-faux est nécessaire pour laisser le passage des corps de bouteilles quelle que soit leur taille.

Selon un aspect, la platine de retournement (6) présente une première bordure longitudinale (81) et une deuxième bordure longitudinale (82), chacune des première et deuxième bordures longitudinales comprenant des ouvertures permettant d'insérer des cols de bouteilles. On trouve ainsi une pluralité de logements débouchant sur la tranche de la platine de retournement. Ceci permet d'insérer transversalement les bouteilles par leur col, en position tête en bas

Selon un aspect, sur la platine de retournement, seulement une des deux bordures longitudinales comprend des ouvertures permettant d'insérer des cols de bouteilles. À condition de refaire pivoter les platines à l'envers après déchargement des bouteilles, on peut ainsi utiliser une platine de retournement simplifiée, avec des logements sur la tranche d'un seul côté. Cela permet aussi de simplifier le nettoyage.

Selon un aspect, il est prévu que des bouteilles sont en position tête en bas uniquement du côté de la bordure longitudinale située entre l'axe de rotation X6 et le bord longitudinal principal de la plaque support.

Selon un aspect, la platine de retournement présent une symétrie générale par rapport à l'axe de retournement X6. Moyennant quoi la platine de retournement peut être pivotée de seulement de 180 degrés sur le premier tronçon au cours du cycle de travail.

Selon un aspect, chaque plaque-support et/ou chaque platine de retournement est de préférence plane. Cette plaque est alors facile à fabriquer à partir d'un flan découpé. C'est aussi une solution économique qui minimise les reprises d'usinage.

Selon un aspect, chaque plaque-support et/ou chaque platine de retournement est faite en inox ou en alliage métallique compatible alimentaire. On a ainsi une plaque légère et durable.

Selon un aspect, on définit une face supérieure de la plaque-support (platine de retournement comprise), et rien ne dépasse de la face supérieure, excepté le cas échéant des plots de centrage agencés sur la périphérie des logements. On remarque que les faces supérieures des plaques dans le tronçon de travail affleurent au niveau d'un plan de travail noté PW.

Selon un aspect, il est prévu une ou plusieurs butées pour stopper la rotation de la platine de retournement aux deux positions extrêmes. En utilisant l'effet de la gravité et l'instabilité des autres positions, on fournit ainsi deux positions mécaniques stables aux extrémités de la course angulaire disponible.

Selon un aspect, il est prévu un indexage par exemple un indexage à billes des deux positions angulaires extrêmes. Les paliers d'axe permettant la rotation de la platine de retournement peuvent être équipé d'un système d'indexation des deux positions extrêmes par exemple un cran et une bille poussée par ressort.

Selon un aspect, il est prévu des moyens de retournement sous forme de tige ou came, extérieure à la plaque support. Ces moyens de retournement peuvent être exercés à poste fixe par une tige de poussée ou bien à la volée en fonction de l'avancement par effet de came.

Selon un aspect, les plaques comportent 8 logements, ou 4 ou 6 ou toute autre valeur. L'invention fonctionne quelque soit le nombre de logements prévus dans la plaque.

Selon un aspect, les plaques présentent une longueur longitudinale PX comprise entre 250mm et 880mm, de préférence comprise entre 360mm et 520mm, et de manière encore plus préférée comprise entre 400 mm et 480mm

Selon un aspect, les plaques ont une épaisseur comprise entre 3 mm et 10 mm. Selon un exemple particulier, on peut choisir une épaisseur entre 6 mm et 8 mm.

La présente invention vise également une machine pour traiter des pots ou des bouteilles de produit alimentaire, comprenant un système de manutention tel que décrit précédemment.

Ainsi, les modules process peuvent venir par le dessus et le dessous sans être gênés par les supports des plaques.

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- la figure 1 illustre en vue de profil une machine ou un équipement comprenant un système de plaques selon la présente invention,
- la figure 2 illustre en vue perspective la machine de la figure 1,
- la figure 3 illustre en vue perspective un système de manutention selon un mode de réalisation de l'invention,
- la figure 4 illustre en vue perspective la zone du premier poste de rotation agencé à une première extrémité de du système,
- la figure 5 illustre en vue perspective la zone du deuxième poste de rotation agencé à une deuxième extrémité de du système,
- la figure 6 illustre une coupe transversale du système de manutention dans le premier tronçon, dit de travail,
- la figure 7 est analogue à la figure 6, illustrant en outre le premier organe de déplacement,
- la figure 8 illustre une coupe transversale du système de manutention dans le deuxième tronçon de retour,
- la figure 9 illustre une coupe transversale du système de manutention avec le guide support auxiliaire,
- la figure 10 montre une vue de face de la machine,
- la figure 11 illustre une plaque en vue de dessus (A), de côté (B) et de face (C),
- la figure 12 illustre une variante de plaque en vue de face,
- la figure 13 est analogue à la figure 9 et illustre plus en détail une coupe transversale du système de manutention selon une variante, au niveau de l'axe longitudinal.
- la figure 14 est analogue à la figure 9 et illustre plus en détail une coupe transversale du système de manutention selon une autre variante, au niveau de l'axe longitudinal.
- les figures 15 et 16 illustrent le deuxième convoyeur de retour, ici dans une variante à courroie et sa motorisation, le tout ayant pour fonction d'entraîner les plaques en retour vertical le long du deuxième tronçon,
- la figure 17 est analogue à la figure 1 et montre une variante de disposition générale du système de manutention par rapport à la machine.
- la figure 18 est une vue en coupe transversale de la plaque support et de sa platine de retournement, dans une posture où les bouteilles sont tête en bas
- la figure 19 est analogue à la figure 18 dans une posture où les bouteilles sont tête en haut,
- la figure 20 est analogue aux figures 18 et 19 et montre une posture intermédiaire au cours de l'opération de retournement,
- la figure 21 illustre une de la plaque support avec sa platine de retournement, respectivement en vue de dessus (A), vue de côté (B), vue en bout (C),
- la figure 22 illustre en perspective une plaque support avec sa platine de retournement, une seule bouteille étant représentée, avec la posture de départ représenté en mode fantôme et la posture d'arrivée en trait plein,
- la figure 23 illustre en perspective une plaque support avec sa platine de retournement non représentée.

### Généralités et agencement général

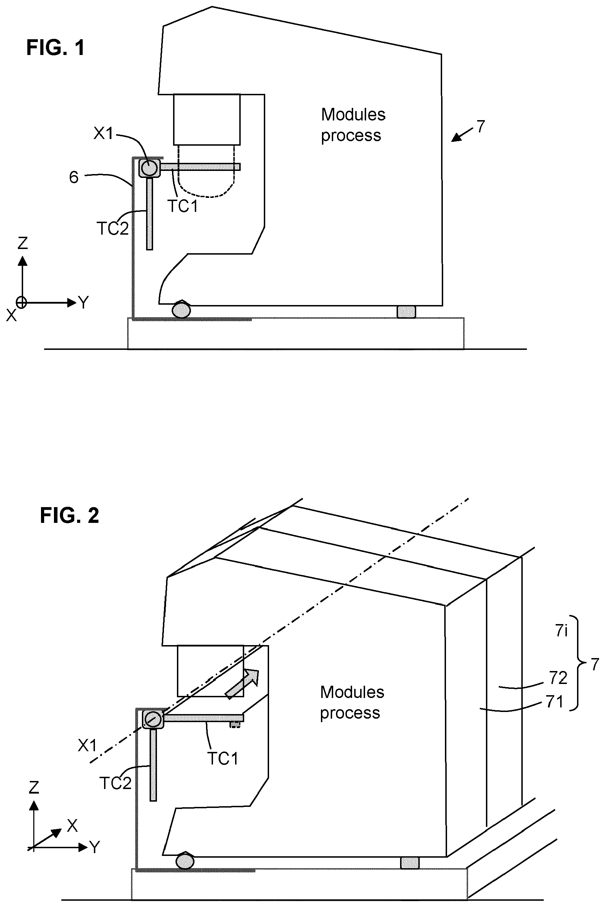

Les figures 1 et 2 représentent une machine traitant des récipients de produit alimentaire. Il peut s'agir de produits lactés, de sirops, de boissons en tout genre, voire de produits pâteux ou en poudre, sans exclure des glaces et de l'alimentation animale. La présente invention s'applique en effet à tout produit alimentaire.

On s'intéresse en particulier au système de manutention mis en œuvre dans ces machines. Toutefois on note que les systèmes de manutention décrits ci-après sont applicables à toute ligne de fabrication, même en dehors du domaine alimentaire.

Pour revenir au domaine alimentaire, ces machines/équipements/lignes permettent de remplir des récipients, par exemple des pots ou des bouteilles, avec un ou plusieurs produits alimentaires, par exemple un produit laitier et/ou des composants alimentaires, et de fermer hermétiquement ces récipients. Il peut être prévu en outre optionnellement des opérations de marquage, étiquetage, désinfection préalable. Toute autre opération n'est pour autant pas exclue. On a illustré aux figures 1 et 2 des modules de traitement juxtaposés dans le sens axial de la machine repérés respectivement 71, 72, 7i. Les différents modules de traitement ou modules process sont collectivement repérés par la référence 7.

On utilise des supports, que l'on va appeler *plaques-support,* ou même simplement *plaques,* pour supporter les récipients pendant les opérations réalisées dans la machine.

Ces supports, généralement repérés par la référence 1, parcourent un circuit bouclé, c'est-à-dire fermé, en effet dans la machine, ils reviennent à vide après avoir été déchargés du/des récipients traité(s).

Selon un agencement général, le système de manutention comprend un premier tronçon **TC1,** dit de travail. En outre, le système de manutention comprend un deuxième tronçon **TC2,** dit de retour rapide.

On remarque ici que la réunion du premier tronçon **TC1** et du deuxième tronçon **TC2** forment ensemble, avec les postes de rotation aux extrémités décrits plus loin, un circuit fermé, c'est-à-dire un circuit bouclé en exploitation normale

A un endroit, chaque plaque-support **1** est chargée avec des récipients vides, et à un autre endroit, en aval, les récipients remplis sont ôtés de la plaque-support 1.

Chaque plaque-support **1** comprend un ou plusieurs logements **18,** chaque logement **18** étant apte à recevoir un récipient.

Selon une première possibilité, le récipient est reçu par le dessus, auquel cas c'est par l'effet de la gravité qu'un bord supérieur 58 du récipient porte sur un bord du logement. Le logement peut être formé comme un orifice. Selon cette première possibilité, le récipient est typiquement un pot **5** avec une collerette **58** plus large que son corps.

Selon une autre possibilité, le récipient peut être reçu par insertion latérale, un col du récipient vient se loger dans un logement présentant une embouchure et un détroit. Après passage du col du récipient par le détroit, le récipient reste retenu dans un trou de dimension correspondant à la dimension du col. Selon cette autre possibilité, le récipient est typiquement une bouteille **8** avec un col et un goulot.

Le cas des bouteilles avec embouchure est visé par la présente invention.

Le nombre de logements peut être de 4 ou de 8. Toutefois, le nombre de logements peut être quelconque, de 2 à 16. Le nombre de rangées selon l'axe transversal Y peut être de 1, de 2, voire de quatre rangées ; sur chacune des rangées on peut avoir de 1 à quatre logements.

Selon un agencement général, le système de manutention comprend une première extrémité **E1** et une deuxième extrémité **E2.**

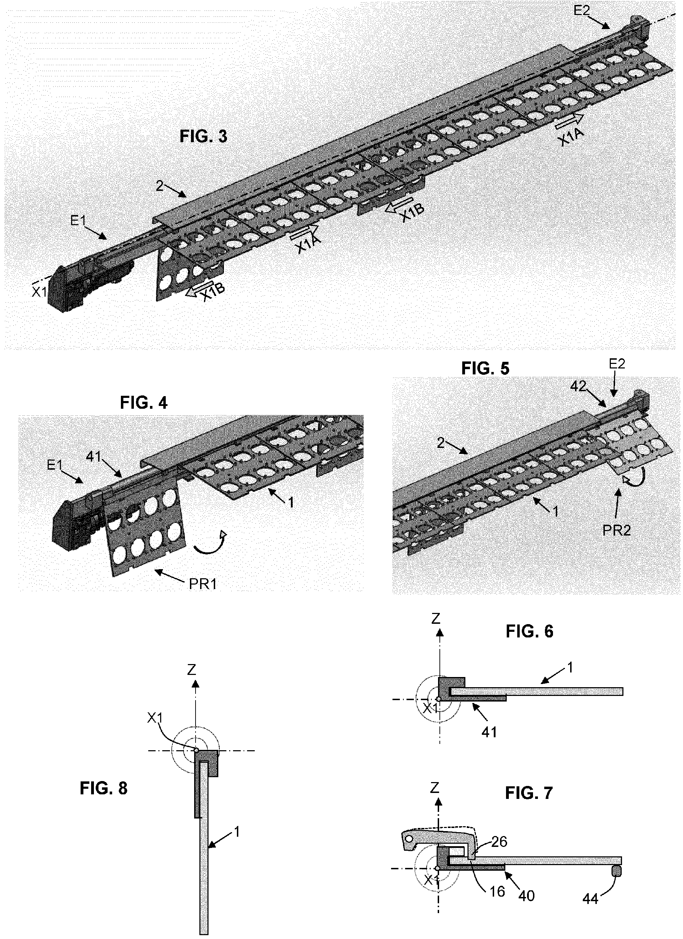

Comme illustré aux figures 3 à 5, selon un agencement général du système, il est prévu un premier poste de rotation **PR1** agencé à la première extrémité **E1,** configuré pour faire pivoter les plaques-support vers la position horizontale, pour les engager sur le premier tronçon **TC1.** De plus, il est prévu un deuxième poste de rotation **PR2** agencé à la deuxième extrémité **E2,** configuré pour faire pivoter les plaques-support vers l'orientation de retour pour les engager sur le deuxième tronçon **TC2.**

L'axe longitudinal de travail (i.e. de la machine) est noté **X** ; on définit un axe longitudinal de référence du système de manutention noté **X1.** L'axe transversal de la machine est noté **Y** l'axe vertical local est noté **Z.**

L'ensemble du système de manutention est supporté par un châssis général de support repéré **6** (représenté seulement de manière générique aux Figures 1, 2 et 17).

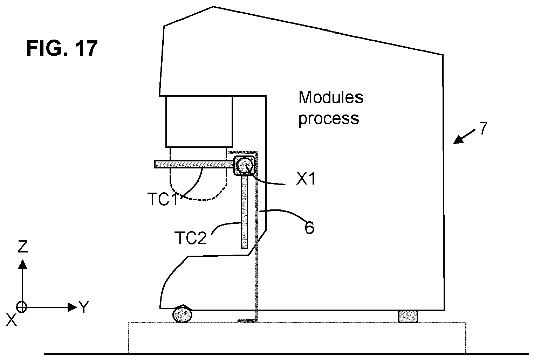

On remarque que deux configurations sont possibles. Aux figures 1 et 2, l'axe **X1** est situé côté extérieur de la machine, i.e. les plaques **1** dans le tronçon **TC1se** trouvent entre l'axe **X1** et les modules process 7. A la figure 17, c'est l'inverse, l'axe **X1** est situé côté intérieur de la machine, i.e. l'axe X1 se trouve entre les plaques **1** sur le premier tronçon **TC1** et les modules process **7.**

### Plague- supports et leur circulation

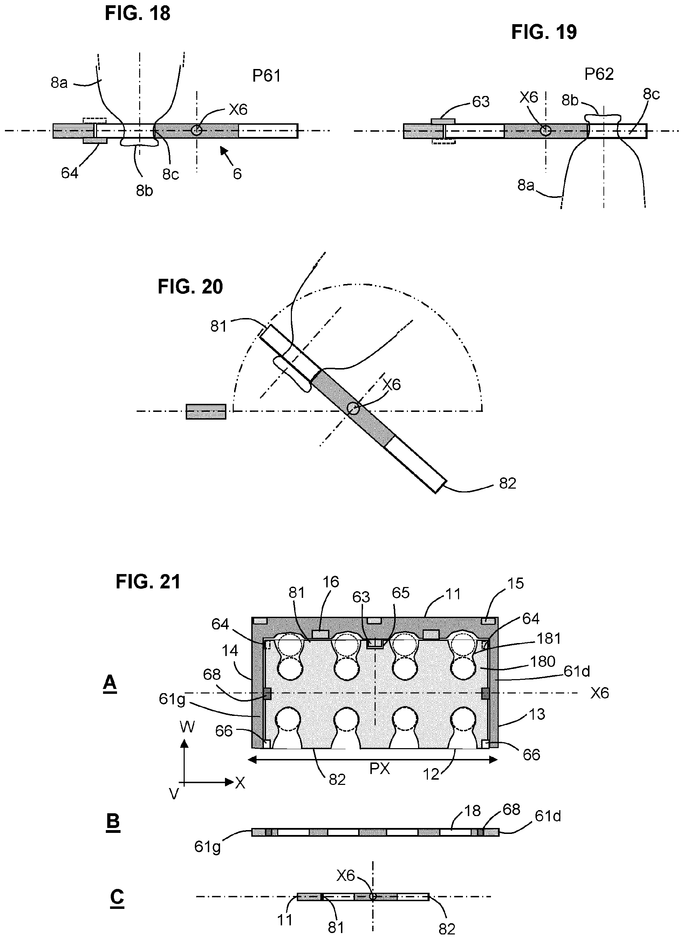

Les plaques-support **1** peuvent de type simple comme décrit en relation avec les figures 3 à 16, mais plaques-support **1** peuvent être de type articulé avec une platine de retournement comme il sera décrit plus loin en relation avec les figures 18 à 23.

Comme visible aux figures 3 à 9 ainsi que 11A, 11B, 11C et 12, chaque plaque-support **1** s'étend généralement dans un plan de référence PR, avec une forme générale rectangle. Chaque plaque-support comprend deux petits côtés respectivement repérés 13 et 14, parallèles à la direction Y de la machine. Chaque plaque-support deux grands côtés parallèles à la direction longitudinale X de la machine, à savoir un premier grand coté 11 formant bordure de guidage et manœuvre, et un autre grand coté **12** formant bordure libre. La longueur longitudinale notée **PX** est ici comprise entre 400 mm et 480mm. Toutefois plus généralement la longueur PX peut être comprise entre 250mm et 880mm, ou bien comprise entre 360mm et 520mm. La largeur de la plaque notée **LW** ici comprise entre 250 mm et 350 mm. Toutefois plus généralement la largeur LW peut être comprise entre 200 mm et 500 mm.

On note qu'il peut être prévu un petit jeu longitudinal entre les plaques.

Chaque plaque-support est faite d'une seule pièce. Chaque plaque-support est plane. L'épaisseur d'une plaque **EPP** peut typiquement être comprise entre 3 et 10 mm. Typiquement, on part d'un flan d'épaisseur constante et on y aménage les encoches et rainures donc il va être question plus loin. Selon un exemple l'épaisseur EPP peut être de 8 mm. Selon un autre exemple, l'épaisseur EPP peut être comprise entre 6 mm et 8 mm.

Chaque plaque-support **1** comprend une face supérieure **1A** et une face inférieure **1B.**

Chaque plaque-support **1** peut être fabriquée en **inox** ou en **alliage** métallique compatible alimentaire. Toutefois un matériau de type plastique dur compatible alimentaire comme du polypropylène ou du polycarbonate pourrait aussi convenir.

Dans le premier tronçon **TC1,** les plaques-support circulent en position horizontale dans une première direction axiale **X1A.** Dans les diverses illustrations, les plaques sont adjacentes les unes aux autres dans le premier tronçon. Toutefois il n'est pas exclu qu'elles soient légèrement espacées les unes des autres.

Dans le tronçon de retour **TC2,** les plaques-support avancent dans une deuxième direction axiale **X1B** opposée à la première direction axiale. Dans ce deuxième tronçon **TC2,** les plaques-support circulent dans une posture ou orientation qui est différente de la position horizontale. On utilise pour cette posture le terme «orientation de retour». Ladite orientation de retour est verticale dans l'exemple représenté. Dans une variante non représentée, l'orientation de retour peut être éloignée angulairement de la verticale de moins de 30 degrés, c'est-à-dire peu éloignée de la position verticale.

Le premier grand coté **11** forme une bordure de guidage et manœuvre. Les fonctions de guidage et d'entraînement sont localisés au voisinage de ce grand côté. Le bord correspondant à ce grand côté est reçu dans une/des rainure(s) de guidage et de réception de guides et d'embases tournantes comme il sera décrit plus loin.

Le bord opposé **12** est seulement guidé mais pas entrainé. La motorisation est ainsi relativement simple et se trouve localisée au voisinage de l'axe longitudinal **X1** du système de manutention.

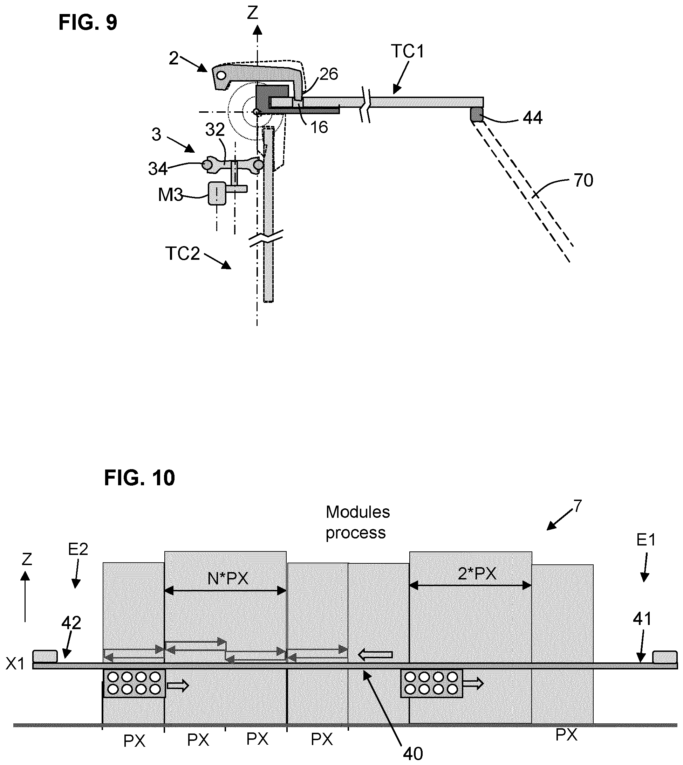

Selon une autre caractéristique, le bord long opposé **12** peut être supporté par un guide auxiliaire **44.** Ce guide auxiliaire peut être continu ou discontinu ; comme illustré la figure 9, ce guide auxiliaire 44 peut être porté par un bras **70** solidaire d'un des modules process susmentionnés **7i.** Ce guide auxiliaire **44** est de préférence amovible.

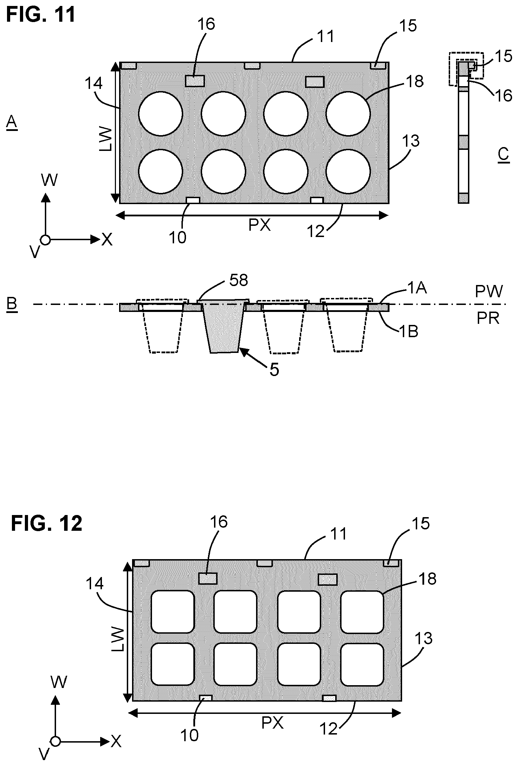

En référence aux figures 11 et 12, on constate que les logements prévus dans la plaque-support peuvent être ronds ou carrés suivant la forme des pots à traiter.

Chaque plaque-support comprend au moins une encoche **16** pour recevoir un doigt du premier organe de déplacement. On remarque que la ou les encoches **16** est (sont) de préférence traversante(s) sur l'épaisseur de la plaque. Ceci est facile à nettoyer et on évite que des saletés ne viennent se loger dans un trou borgne

Dans l'exemple illustré, chaque plaque-support comprend deux encoches.

De plus, selon une option, il est prévu une saillie **15** formant projection hors plan, laquelle sert à retenir la plaque notamment dans son orientation verticale.

Selon une configuration, au lieu d'une saillie, on utilise pour le maintien de la plaque une rainure longitudinale repérée **19** dans laquelle vient se loger une nervure longitudinale **28, 29** prévue dans les moyens de guidage des plaques.

Dans une variante non représentée, la position des encoches **16** pour l'avancement des plaques et la position de la rainure longitudinale **19** pour le maintien et le guidage peuvent être confondues.

En outre, il peut être prévu des encoches auxiliaires repérées **10** qui peuvent être utilisées à des fins d'indexation sur les postes de traitement.

On remarque aussi que la plaque peut avoir une forme générale carrée au lieu de rectangle.

De plus il faut noter que les petits côtés ne sont pas forcément rectilignes ils peuvent comprendre un décroché convexe ou concave.

### Organes de déplacement

Dans le premier tronçon il est prévu un premier organe de déplacement **2** des plaques-support le long de la première direction axiale **X1A.** Dans une configuration illustrée, le premier organe est de type pas à pas. Toutefois, il faut noter que tout type de mécanisme déplacement peut être envisagé de la cadre de la présente invention.

Le premier organe de déplacement **2** comprend dans l'exemple illustré une barre transfert **21** qui s'étend généralement le long de la direction axiale et est monté pivotante autour de l'axe **X1.**

La barre transfert **21** du premier organe de déplacement **2** comprend un doigt **26** à distance de l'axe **X1** et configuré pour être reçu dans une encoche **16** de la plaque, le retour à vide du doigt et de la barre transfert étant réalisé alors que le doigt **26** n'est pas engagé.

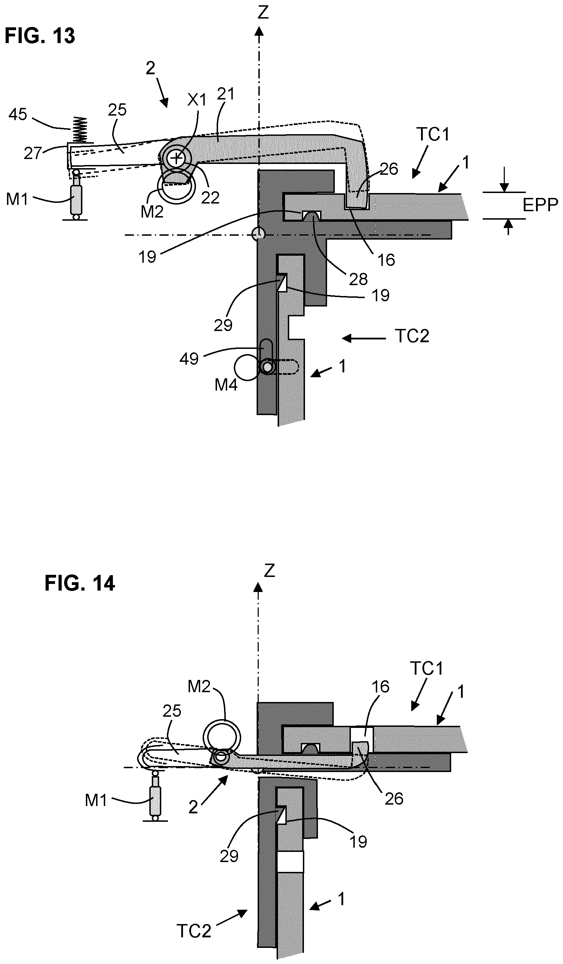

Comme illustré aux figures 13 et 14, la barre transfert **21** du premier organe de déplacement **2** fonctionne avec deux degrés de liberté, à savoir une rotation autour de **X1** et un avancement selon la direction axiale. La rotation permet l'engagement et le désengagement du doigt **26** dans une encoche **16.**

La translation axiale permet de faire avancer d'une distance prédéterminée une ou plusieurs plaques sur le premier tronçon. Dans l'exemple illustré à la figure 10, la distance prédéterminée coïncide avec la longueur axiale de la plaque c'est-à-dire le pas **PX.** Selon d'autres possibilités, par exemple avec deux encoches par plaque, la distance d'avance à chaque mouvement de la barre transfert peut être **PX/2.** Selon d'autres possibilités, par exemple avec quatre encoches par plaque, la distance d'avance à chaque mouvement de la barre transfert peut être **PX/4.**

La translation axiale est réalisée par un mécanisme de vis écrou ou crémaillère, on peut généralement utiliser un mécanisme de translation axiale connu en soi. Il est prévu un arbre d'axe noté **22,** qui peut être fixe ou solidaire de la barre transfert elle-même. Le dispositif comprend aussi un moteur noté **M2,** ou un moto-réducteur, qui est placé au voisinage de l'arbre d'axe. Un pignon en sortie vient s'engager sur une crémaillère ou une denture hélicoïdale pour déplacer la barre transfert **21** le long de la direction longitudinale X1, avec rotation de l'arbre d'axe 22 ou non selon les configurations possibles.

S'agissant du mouvement d'engagement et de dégagement du doigt, la barre transfert est équipée d'un levier arrière repéré **25** solidairement relié au du corps de la barre transfert ; le levier arrière **25** est reçu dans une liaison glissière **27.** Le levier arrière **25** peut ainsi coulisser selon X1 dans la glissière 27 longitudinale. Comme dans le cas illustré à la figure 13, il est prévu un vérin de commande noté **M1** à simple effet ainsi qu'un ressort de rappel **45.** Le ressort de rappel a pour effet de basculer la barre transfert autour de l'axe X1 vers la position dégagée du doigt de commande **26,** alors qu'à l'inverse l'actionnement du vérin M1 a pour effet de basculer la barre transfert dans la direction opposée et d'engager le doigt de commande dans l'encoche **16.**

Sur la figure 14, on a illustré le cas d'un vérin à double effet ; dans ce cas le vérin est commandé dans une direction pour dégager le doigt de commande, et commandé dans la direction opposée pour engager le doigt de commande 26 afin de faire avancer les plaques.

Ainsi le premier organe de déplacement **2** peut être qualifié de « navette transfert ». Tout autre solution pour provoquer un avancement d'au moins une plaque sur une distance prédéterminée peut également être envisagée.

Concernant le nombre de doigts **26,** il peut être prévu autant de doigts que d'emplacement de plaques support dans le premier tronçon de travail ; dans ces conditions, la navette transfert engage simultanément toutes les plaques situées sur le tronçon de travail **TC1.** Ainsi la barre transfert 21 et l'arbre d'axe 22 parcourent quasiment toute la longueur du système de manutention excepté le cas échéant les extrémités. Ainsi, les plaques ne se poussent pas les unes des autres et ne sont pas nécessairement adjacentes. Ceci permet aussi de faire fonctionner la machine en essai avec uniquement quelques plaques.

Dans une autre variante, la navette transfert engage seulement la première plaque située au début du premier tronçon et les plaques se poussent les unes les autres jusqu'à la fin du premier tronçon. L'arbre d'axe et la barre transfert sont alors beaucoup plus courts, c'est-à-dire l'ordre de grandeur correspond à la longueur d'une plaque PX ou un peu plus.

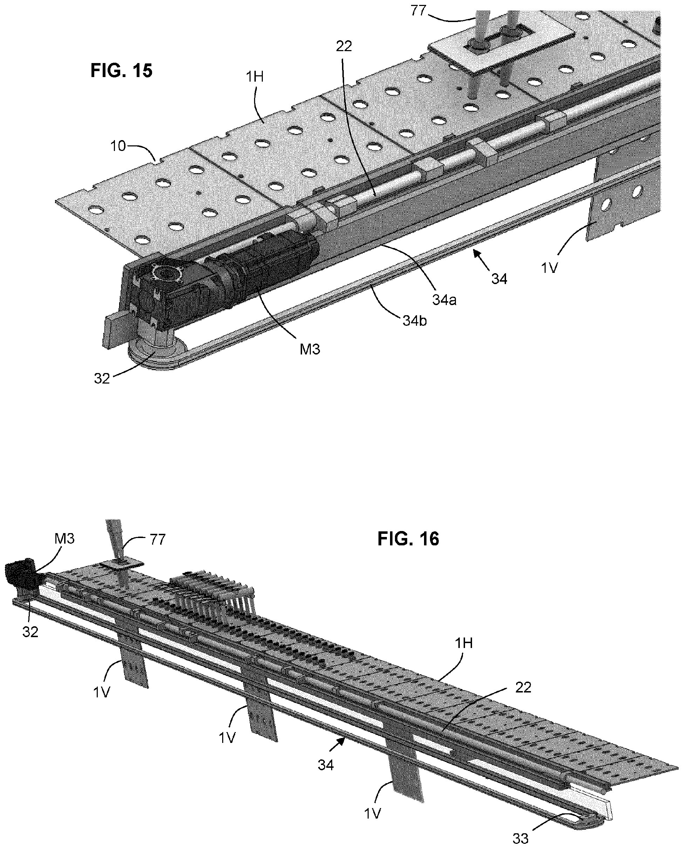

En alternative, la navette transfert peut travailler par le dessous comme illustré aux figures 14 et 15, cas illustré plus loin. Lorsque la barre transfert **21** est située en dessous de la face supérieure **1A** des plaques dans le tronçon de travail, la zone située au-dessus du plan de travail repéré **PW** est libre de tout élément qui peut présenter une gêne risque de pollution.

Lorsque le vérin **M1** pousse vers le haut la barre de commande bascule autour de **X1** et le doigt de commande 26 est dégagé de l'encoche 16. À l'inverse lorsque **M1** pousse vers le bas, la barre de commande bascule inversement autour de **X1** et le doigt de commande 26 est engagé de l'encoche 16.

Le système de manutention comprend un deuxième organe de déplacement **3** configuré pour déplacer les plaques-support dans la deuxième direction axiale X1B dans le deuxième tronçon **TC2.** Le deuxième organe de déplacement peut être de type continu ou type discontinu.

Comme visible aux figures 9, 15 et 16, le deuxième organe de déplacement comprend une courroie sans fin repérée **34.** Cette courroie est guidée et entraînée par deux poulies à gorge, dont une poulie meneuse **32** entraînée par un moteur **M3** et une poulie suiveuse **33** à l'autre extrémité de la courroie. La courroie vient frotter sur la face inférieure **1B** des plaques, en posture d'orientation de retour, à savoir en position verticale, pour les entraîner de la deuxième extrémité **E2** vers la première extrémité **E1.**

La courroie peut comporter une denture intérieure pour son entrainement par la poulie motorisée et une denture extérieure pour l'entrainement des plaques par la courroie.

En lieu et place de la courroie, le deuxième organe de déplacement peut être formé par une chaîne à maillons articulés montée en boucle sur deux pignons dentés aux extrémités. Un premier pignon denté est moteur, et l'autre est monté sur un support rappelé élastiquement par ressort pour tendre à maintenir une tension suffisante sur la chaîne en permanence. Il peut être prévu des patins fixés coté extérieur de certains maillons de la chaîne en boucle pour venir en appui sur les plaques dans leur posture verticale et qui sont dans le tronçon de retour **TC2.**

Plus précisément, un brin de travail **34a** est agencé au contact des plaques qui se trouvent sur le deuxième tronçon alors qu'un brin de retour **34b** est à distance des plaques et sert pour le retour à vide. La vitesse d'avance du brin de travail de la courroie est relativement rapide. En pratique elle au moins égale à la vitesse d'avance de la barre transfert dans le sens opposé. Par exemple la vitesse d'avance de la courroie **34** peut être au moins égale à 500 mm par seconde.

La motorisation des plaques sur le deuxième tronçon pourrait être différente de celle illustrée par exemple un système avec impulsion, un retour par gravité, ou tout autre solution rendu possible par le fait qu'il n'y ait pas d'opération de travail sur les plaques sur ce tronçon de retour.

Comme illustré sur les figures 6 à 8, le premier poste de rotation **PR1** comprend une première embase tournante **41** du côté de la première extrémité **E1.** La première embase tournante fait pivoter les plaques-support vers la position horizontale, pour les engager sur le premier tronçon TC1. La première embase tournante peut être formée comme un élément monté à rotation autour d'un axe confondu avec **X1** ou voisin de ce dernier, cet élément étant piloté en position angulaire par un moto réducteur avec deux capteurs fins de course ou un moteur pas à pas avec un capteur fin de course.

La première embase tournante **41** est donc déplaçable entre une première position adaptée pour accueillir une plaque-support arrivant sur le deuxième tronçon dans un orientation de retour et une deuxième position adaptée pour placer une plaque-support en position horizontale en entrée du premier tronçon.

Il peut être prévu une butée effaçable **49** qui subordonne l'entrée d'une plaque verticale en retour dans l'embase tournante **41** à une position de réception verticale de cette embase tournante. La butée effaçable **49** peut être commandée sélectivement par un petit actuateur **M4.** En variante, la butée effaçable peut être une forme intégrée dans le flanc de l'embase tournante **41,** sans nécessiter une commande spécifique autre que la rotation de l'embase tournante **41.**

Du côté de la deuxième extrémité **E2,** le deuxième poste de rotation PR2 comprend une deuxième embase tournante **42.** La deuxième embase tournante fait pivoter les plaques-support vers l'orientation de retour pour les engager sur le deuxième tronçon TC2.

La deuxième embase tournante peut être formée comme un élément monté à rotation autour d'un axe confondu avec **X1** ou voisin de ce dernier, cet élément étant piloté en position angulaire par un moto réducteur avec deux capteurs fins de course ou un moteur pas à pas avec un capteur fin de course. Si la voie est libre, la deuxième embase tournante fait pivoter la plaque en position verticale et l'insère immédiatement dans le deuxième tronçon de retour **TC2.**

Chacune des embases tournantes comprend une rainure de réception du bord longitudinal, i.e. le grand coté **11** formant bordure de guidage et manœuvre.

Tant la première embase tournante que la deuxième embase tournante comprennent un moyen de rétention des plaques. Lorsque la plaque contient une projection hors plan **15,** les embases tournantes comprennent un logement formant glissière pour recevoir cette projection hors plan (Cf figure 11).

Dans une variante, les embases tournantes comprennent une nervure en saillie **29** sur laquelle vient porter l'intérieur de la rainure **19** ménagée dans les plaques.

En outre, il est prévu un support guide principal fixe **40,** disposé de manière continue le long de la première direction axiale **X1A,** entre les première et deuxième embases tournantes **41,42.** Le support est ainsi continu pour les plaques depuis la première extrémité **E1** jusqu'à la deuxième extrémité **E2.**

Le support guide principal comprend une nervure **28** qui permet le guidage longitudinal des plaques, la nervure **28** étant reçue dans la rainure **19.**

Comme illustré la figure 13, le support guide principal est formé comme un profilé à section généralement constante le long de **X1.** Ce profilé permet d'une part de guider des plaques en position horizontale qui transitent dans le premier tronçon **TC1,** et d'autre part de guider des plaques en position verticale dans le deuxième tronçon **TC2** où elles circulent en retour.

Ce genre de système avec plaques-support peut être utilisé aussi dans des machines ou des installations qui traitent des récipients de produits non alimentaires auxquelles la présente invention peut être appliquée.

### Fonctionnement

Dans le premier tronçon de travail, les plaques sont déplacées séquentiellement d'un poste à un autre par le premier organe de déplacement **2** décrit plus haut. Les plaques sont en position horizontale repère **1H** en figures 15 et 16. Suivant la configuration de la machine, diverses opérations sont effectuées à poste fixe, dans l'intervalle de temps entre les mouvements aller de la barre transfert. Selon un exemple très simplifié, illustré la figure 15, il est prévu des buses de dosage repérées **77,** localisé à l'endroit d'une des positions de la plaque.

A la fin du tronçon de travail **TC1,** la deuxième embase tournante **42** effectue une rotation de chaque plaque-support **1** autour de l'axe longitudinal de référence **X1** d'un angle θ (90° dans un cas type). Suite à quoi, chaque plaque parcourt le tronçon de retour en gardant substantiellement cette orientation. Les plaques sont en position verticale repère **1V** en figures 15 et 16. Les plaques sont déplacées le long du deuxième tronçon **TC2** par le deuxième organe de déplacement 3 décrit plus haut.

Après quoi la première embase tournante **41** fait tourner la plaque support qui subit une rotation dans le sens inverse autour de l'axe longitudinal X1 d'un angle -θ, c'est-à-dire opposé à l'angle appliqué par la deuxième embase tournante.

Sur le fonctionnement complet en boucle, il faut remarquer que le premier tronçon **TC1** est totalement occupé par les plaques, alors que le deuxième tronçon **TC2** ne comprend que quelques plaques, comme ceci est visible de la figure 16.

Ainsi, le nombre de plaques sur le premier tronçon peut être compris entre une dizaine et une trentaine suivant la configuration de la machine. Par contraste, on ne trouve que 1 à 4 plaques sur le tronçon de retour TC2. Avantageusement, on minimise le nombre de plaques nécessaires pour le système de manutention et le process de l'installation.

### Plaques-support avec platine de retournement

On remarque que le système des plaques-support avec platine de retournement 6 qui va être décrit maintenant peut être utilisé dans le cadre d'une transitique (i.e. système de manutention) conventionnelle, avec un retour des plaques à plat ou après retournement complet (180°).

Toutefois, concernant le système des plaques-support **1** avec une platine de retournement comme décrit en relation avec les figures 18 à 23, tout ce qui n'est pas décrit en particulier doit être considéré comme identique ou similaire à ce qui a été décrit pour les plaques monolithiques en relation avec les figures 3 à 16

Ici, la plaque support comprend une armature en forme de C avec un corps **60** et deux bras **61g,61d,** comme visible en particulier à la figure 21. Le corps **60** forme l'interface principal avec le premier organe de déplacement 2 des plaques-support le long de la première direction axiale dans le tronçon de travail TC1. Le corps **60** s'étend le long de la direction longitudinale sur la longueur de plaque PX. Le corps **60** correspond au premier grand coté 11 formant bordure de guidage et manœuvre pour la plaque en général.

Les deux petits côtés respectivement repérés **13** et **14,** parallèles à la direction **Y** de la machine, correspondent respectivement au bras droit **61d** et au bras gauche **61g** de l'armature en forme de C.

Le corps **60** comprend au moins une encoche **16** pour recevoir un doigt du premier organe de déplacement **2.** Pour le guidage, il est prévu des saillies **15** formant projection hors plan et/ou une rainure longitudinale repérée **19** similairement à ce qui a déjà été décrit précédemment.

La différence principale concerne la présence d'une platine de retournement **6.** La platine de retournement **6** est une plaque, de préférence de même épaisseur que l'armature en forme de C. Toutefois, le corps de plaque et la platine pourraient avoir des épaisseurs distinctes.

La platine de retournement **6** présente deux bords longitudinaux notés **81,82.** Plus précisément, il est prévu une première bordure longitudinale **81** et une deuxième bordure longitudinale **82.**

La première bordure longitudinale **81** comprend des ouvertures **180** permettant d'insérer des cols de bouteilles. Chacune des ouvertures **180** (ici 4) présente une embouchure un peu plus large que le col **8c,** puis un rétrécissement **181** qui présente une dimension légèrement inférieure à celle du col **8c** et un fond en cul de sac pour recevoir le col une fois la bouteille insérée. La collerette **8b** d'embouchure de la bouteille repose sur le logement.

Dit autrement, on a ainsi une pluralité de logements débouchant sur la tranche de la platine de retournement.

Optionnellement sur la deuxième bordure longitudinale **82** il peut aussi être prévu des ouvertures **180** permettant d'insérer des cols de bouteilles. Dans ce cas la platine de retournement présente une symétrie générale par rapport à l'axe de retournement.

Mais dans une variante, les logements ne sont prévus que sur une des tranches de la platine.

La platine de retournement **6** est montée sur l'armature en forme de C par une articulation pivotante d'axe **X6.** Plus précisément, la platine de retournement 6 est montée à pivotement par rapport aux deux bras **61g,61d** autour de l'axe de retournement **X6** parallèle à l'axe longitudinal de machine X.

La platine de retournement **6** est donc déplaçable entre plusieurs positions selon cette rotation.

Plus précisément, La platine de retournement **6** peut être pivotée de 180 degrés entre une première position notée **P61** et une deuxième position notée **P62.**

Dans la première position **P61,** le récipient/la bouteille a son goulot orienté vers le bas. C'est dans cette posture que la ou les bouteilles vides sont insérées par leur col dans la platine. C'est dans cette posture que la ou les bouteilles vides sont désinfectées et/ou décontaminées par un jet de fluide décontaminant qui vient par le dessous.

On note qu'il est prévu un espace suffisant entre la platine tournante et le corps **60** de plaque, pour descendre les goulots de bouteilles avant de les insérer dans les logements. Ceci est représenté en pointillés sur la figure 21A.

Dans la deuxième position **P62,** le récipient/la bouteille a son goulot orienté vers le haut. C'est dans cette posture que la ou les bouteilles sont remplies et fermées, puis déchargées.

Selon une possibilité, représentée aux figures, il est prévu deux butées de fin de course angulaire, ce qui borne à un demi-tour la rotation possible de la platine. La première butée **63** est agencée à mi longueur longitudinale, et depuis le corps, elle fait saillie vers l'axe **X6** et s'étend juste au-dessus du plan supérieur de la plaque, comme illustré à la figure 19. La butée première **63** sécurise la deuxième position **P62,** rendue stable par la gravité et la présence des bouteilles.

Les autres butées **64** sont agencées aux coins, à l'angle du corps et de chaque bras. Les autres butées **64** s'étendent juste au-dessous du plan inférieur de la plaque, comme illustré à la figure 18. Les autres butées **64** sécurisent la première position **P61,** rendue stable par la gravité et la présence des bouteilles.

Dit autrement, les butées (63,64) sont prévues pour stopper la rotation de la platine de retournement aux deux positions extrêmes **P61** et **P62.**

Comme visible à la figure 21, pour autoriser le mouvement complet de 180 degrés, il est prévu un évidement **65** un peu plus large que la butée **63** ce qui permet la rotation jusqu'à la première position **P61.** De manière similaire, il est prévu des évidements de coin **66** correspondant aux butées de coin **64,** pour ne pas présenter d'obstruction pour le mouvement complet jusqu'à la deuxième position **P62.**

Selon une autre possibilité, les positions extrêmes P61, P62 sont indexées par l'axe de rotation et le système est dépourvu de butées.

Selon une autre possibilité, on peut cumuler un indexage et les butées décrites plus haut.

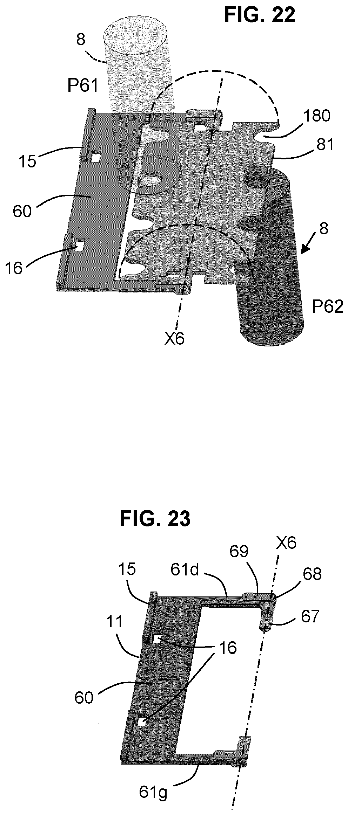

Du côté du côté opposé au bord de guidage 11, la plaque en général se trouve au moins en partie en porte-à-faux de manière à autoriser le pivotement de la platine de retournement avec les bouteilles. En effet le corps de bouteille **8a** décrit un arc de rayon conséquent (cf figures 20 et 22).

Sur les deux bras, il est prévu des paliers **68** réalisant le support pour la rotation, la platine tourillonnant sur ces paliers, grâce des de moyeux **67** sur lesquels les platines sont fixées. Chaque palier **68** fait partie d'une chape **69** fixée sur le bras comme illustré à la figure 23.

Pour provoquer le retournement de la platine, il est prévu des moyens de retournement sous forme de tige ou came, extérieure à la plaque support, qui pousse sur la platine. La cinématique de poussée peut être rectiligne ou circulaire suivant les traits pointillés représentés à la figure 22

Selon un exemple, ces moyens de retournement peuvent être exercés à poste fixe par une tige de poussée.

Selon une autre solution, on peut avoir recours à un moyen continu, qui agit à la volée en fonction de l'avancement par effet de came.

Avantageusement il est prévu à un endroit sur la machine un premier moyen de retournement pour faire passer chaque platine, après chargement des bouteilles, de la première position **P61** à la deuxième position **P62.**

Il peut être prévu à un endroit plus en aval, après déchargement, ou bien très en amont avant chargement des bouteilles vides, un deuxième moyen de retournement pour faire tourner chaque platine vide de la deuxième position **P62** à la première position **P61.**

On remarque que la longueur des bras **61g,61d** peut être plus courte que la largeur **LW** générale des plaques.

## Revendications

1. Système de manutention, dans une machine de traitement de récipients destinés à recevoir un produit alimentaire, le système de manutention comprenant :
- une pluralité de plaques-support (1) circulant en circuit fermé, chaque plaque-support (1) comprenant un ou plusieurs logements, chaque logement (18) étant apte à recevoir un récipient (8), par exemple de type bouteille,
- un premier tronçon (TC1), dit de travail, dans lequel les plaques-support circulent en position généralement horizontale dans une première direction axiale (X1A), avec un premier organe de déplacement (2) des plaques-support le long de la première direction axiale,
**caractérisé en ce que** chacune des plaques-support (1) comporte une platine de retournement (6) configurée pour être pivotée de 180 degrés entre une première position (P61) et une deuxième position (P62),
et dans la première position, le récipient a son goulot orienté vers le bas, et dans la deuxième position, le récipient a son goulot orienté vers le haut.

2. Système selon la revendication 1, dans lequel la plaque support comprend une armature en forme de C avec un corps (60) et deux bras (61g,61d) et la platine de retournement (6) est montée à pivotement autour d'un axe de retournement (X6) parallèle à l'axe longitudinal de machine X, par rapport aux deux bras.

3. Système selon l'une des revendications 1 à 2, dans lequel il est prévu une pluralité de logements débouchant sur la tranche de la platine de retournement, chaque logement pouvant recevoir une bouteille par son col.

4. Système selon l'une des revendications 1 à 3, dans lequel la plaque support comprend un bord longitudinal principal (11), par lequel la plaque est guidée et mise en mouvement, et le bord longitudinal opposé (12) est au moins en partie en porte-à-faux de manière à autoriser le pivotement de la platine de retournement avec les bouteilles.

5. Système selon l'une des revendications 1 à 4, dans lequel la platine de retournement (6) présente une première bordure longitudinale (81) et une deuxième bordure longitudinale (82), chacune des première et deuxième bordures longitudinales comprenant des ouvertures (18) permettant d'insérer des cols de bouteilles.

6. Système selon la revendication 5, dans lequel il est prévu que des bouteilles sont en position tête en bas uniquement du côté d'une des bordures longitudinales (81, 82) située entre l'axe de rotation (X6) et le bord longitudinal principal de la plaque support.

7. Système selon l'une des revendications 1 à 6, dans lequel la platine de retournement présent une symétrie générale par rapport à l'axe de retournement (X6).

8. Système selon l'une des revendications 1 à 6, dans lequel il est prévu une ou plusieurs butées (63,64) pour stopper la rotation de la platine de retournement aux deux positions extrêmes.

9. Système selon l'une des revendications 1 à 8, dans lequel il est prévu un indexage à billes aux deux positions angulaires extrêmes.

10. Système selon l'une des revendications 1 à 2, dans lequel il est prévu des moyens de retournement sous forme de tige ou came, extérieure à la plaque support.
